# FASCICULE DE BREVET EUROPEEN

(11) **EP 1 663 671 B1**
(45) Date de publication et mention de la délivrance du brevet: **14.11.2007**
(21) Numéro de dépôt: 04765193.0
(22) Date de dépôt: 15.09.2004
(51) Int. Cl.: B60C 9/20

(54) **ARMATURE DE RENFORCEMENT DE SOMMET DE PNEUMATIQUE**
VERSTÄRKUNGSSCHICHT FÜR EINE REIFENLAUFFLÄCHE
REINFORCEMENT LAYER FOR A TYRE TREAD

(30) Priorité: 18.09.2003 FR 0310989
(43) Date de publication de la demande: 07.06.2006
(73) Titulaire: Société de Technologie Michelin, 63000 Clermont-Ferrand (FR); Michelin Recherche et Technique S.A., 1763 Granges-Paccot (CH)
(72) Inventeur: MAUREL, Jean-Philippe, F-63122 Ceyrat (FR)
(74) Mandataire: Diernaz, Christian
(86) Numéro de dépôt international: PCT/EP2004/010279
(87) Numéro de publication internationale: WO 2005/025895

(56) Documents cités:
- FR-A- 2 421 074
- US-A- 4 690 191

## Description

L'invention concerne les pneumatiques à carcasse radiale renforcés dans une région dite de sommet avec une armature composée d'empilements de renforts.

Un pneumatique pour véhicule de tourisme comprend en règle générale une armature de carcasse radiale ancrée dans deux bourrelets et surmontée radialement par une armature de sommet elle même surmontée radialement par une bande de roulement destinée à venir en contact avec la chaussée pendant le roulage. L'armature de sommet comporte au moins deux empilements formés chacune d'une pluralité de renforts, les renforts d'un empilement étant croisés avec les renforts des empilements adjacentes.

Ces empilements ("layer" en anglais) peuvent être réalisées par exemple sous forme de nappes ("ply" en anglais), chaque nappe étant composée d'une pluralité de fils ou câbles sensiblement parallèles les uns aux autres. Dans un autre mode connu de réalisation, les renforts sont posés individuellement ou par groupe de plusieurs pendant la fabrication du pneumatique sans passer par l'étape préalable de réalisation des nappes. Par commodité, dans le texte qui suit on désigne par "nappe" chaque empilement de l'armature de sommet peu important la méthode d'obtention dudit empilement.

Dans le cas d'un pneumatique ayant une carcasse dont les renforts sont de nature textile, il est connu, afin d'augmenter l'effet mécanique de triangulation en combinaison avec les nappes de travail, de pourvoir le sommet du pneumatique avec une nappe additionnelle unique dont les renforts font un angle supérieur à 60° avec le plan équatorial du pneumatique.

Par définition, le plan équatorial d'un pneumatique est le plan perpendiculaire à l'axe de rotation du pneumatique divisant axialement l'armature de sommet en deux parties sensiblement identiques.

Dans une autre solution connue, à la place d'une nappe unique, il est possible d'employer deux nappes additionnelles positionnées de part et d'autre du plan équatorial, de façon ou non symétrique par rapport à ce même plan.

Par ailleurs, et compte tenu des vitesses de rotation élevées auxquels sont soumis les pneumatiques pour véhicules de tourisme, il est connu de pourvoir les sommets desdits pneumatiques avec au moins une armature additionnelle de renforcement dont les renforts sont disposées avec une.orientation sensiblement parallèle au plan équatorial (c'est-à-dire faisant un angle inférieur à 10° avec ledit plan). Les renforts de cette armature additionnelle peuvent être de nature textile ou métallique et sont choisis pour avoir une résistance appropriée aux efforts auxquels sont soumis les pneumatiques en utilisation.

Dans l'état de la technique, le document Japonais JP06/171308 montre un sommet de pneumatique comprenant deux nappes de travail, une nappe additionnelle de renforcement méridien (c'est-à-dire une nappe dont les renforts font un angle supérieur à 60° avec la direction circonférentielle) placée radialement entre la carcasse et une première nappe de travail, et, radialement à l'extérieur des nappes de travail, deux armatures additionnelles de renforts orientés dans la direction circonférentielle. D'autre part, le document JP05/069702 montre un pneumatique pouvant avoir une nappe de renforcement méridien centrée sur le plan équatorial ou deux nappes de renforcement méridien disposées symétriquement par rapport audit plan ; ce document prévoit en outre la présence de deux armatures de renforcement circonférentiel disposées sur les extrémités axialement externes de la nappe de renforcement méridien.

Dans un autre document, FR 2421074 (correspondant au préambule de la revendication 1), il est décrit un pneumatique comprenant deux petites nappes de renforcement méridien disposées symétriquement par rapport au plan équatorial et sous les extrémités des nappes de travail ; il est en outre prévu une armature unique de renforcement circonférentiel placée axialement entre les deux petites nappes de renforcement méridien.

On a constaté que ces solutions n'étaient pas entièrement satisfaisantes dans la mise au point de pneumatiques devant répondre aux exigences de performances des véhicules développés aujourd'hui et aux exigences des utilisateurs en matière de résistance à l'usure (augmentation de la durée d'utilisation) des pneumatiques en roulage.

Pour répondre à cet objectif, le pneumatique selon l'invention comprend une armature de carcasse radiale (c'est-à-dire une armature dont les renforts font un angle égal à ou proche de 90° avec la direction circonférentielle), surmontée radialement à l'extérieur par une armature de sommet de largeur Ls et comportant au moins deux nappes dites "de travail", chaque nappe de travail étant composée d'une pluralité de renforts disposés selon un angle moyen compris entre 17° et 35° avec la direction circonférentielle, les renforts d'une nappe de travail étant croisés avec les renforts d'une autre nappe de travail, cette armature de sommet comprenant en outre deux nappes additionnelles de renforcement méridien, de largeur axiale Lm et Lm', les extrémités axialement les plus à l'intérieur desdites nappes de renforcement méridien étant distantes d'une distance Lt, les extrémités axialement les plus à l'extérieur desdites nappes de renforcement méridien étant distantes d'une distance Le, ces nappes additionnelles comportant une pluralité de renforts faisant un angle supérieur à 60° avec la direction circonférentielle, l'armature de sommet comprenant aussi au moins une armature de renforcement circonférentiel (c'est-à-dire une armature dont les renforts font avec le plan équatorial un angle inférieur ou égal à 10°) de largeur totale L8, ce pneumatique étant caractérisé en ce que :

la largeur totale L8 de l'armature de renforcement circonférentiel est au moins égale à la distance Le séparant les extrémités axialement les plus à l'extérieur des deux nappes additionnelles de renforcement méridien,

les extrémités (A, A') axialement les plus à l'extérieur des nappes de renforcement méridien sont axialement à l'intérieur des extrémités axialement les plus à l'extérieur de la nappe de travail la moins large,

la rigidité d'extension dans la direction circonférentielle de l'armature de renforcement circonférentiel dans les régions radialement en coïncidence avec les nappes de renforcement méridien est inférieure à la rigidité d'extension de ladite armature dans les régions ne comportant pas de nappes de renforcement méridien.

Une région radialement en coïncidence avec une nappe de renforcement méridien correspond à une zone radialement à l'extérieur ou bien radialement à l'intérieur à l'aplomb de ladite nappe ; c'est-à-dire une région comprise entre deux plans perpendiculaires à l'axe de rotation et passant par les extrémités axiales de la nappe de renforcement méridien considéré.

Préférentiellement, la distance axiale Lt entre les nappes de renforcement méridien est au plus égale à 15% de la largeur Ls du sommet.

Préférentiellement, les largeurs Lm, Lm' des nappes de renforcement méridien sont comprises entre 37% et 49% de la largeur Ls du sommet. Avantageusement, les nappes de renforcement méridien sont disposées de part et d'autre du plan équatorial du pneumatique.

La distance Le entre les extrémités axialement les plus à l'extérieur des deux nappes additionnelles de renforcement méridien correspond sensiblement à la somme de la distance Lt séparant les extrémités axialement les plus à l'intérieur des mêmes nappes additionnelles et des largeurs Lm et Lm' desdites nappes.

La largeur totale L8 correspond à la distance axiale séparant les extrémités axialement les plus éloignées de l'armature de renforcement circonférentiel. De manière avantageuse la distance L8 est au moins égale à la largeur Ls du sommet.

Selon l'invention, l'armature de renforcement circonférentiel peut être placée radialement à l'extérieur des nappes de travail ou entre deux nappes de travail ou encore radialement au dessous de toutes les nappes de travail.

Préférentiellement, la rigidité d'extension dans la direction circonférentielle de l'armature de renforcement circonférentiel dans les régions radialement en coïncidence avec les nappes de renforcement méridien est au plus égale à 50% à la rigidité d'extension de ladite armature dans les régions ne comportant pas de nappes de renforcement méridien.

La rigidité d'extension de l'armature de renforcement circonférentiel est définie comme le rapport entre une force d'extension appliquée dans le sens circonférentiel par unité de largeur de ladite armature et l'allongement correspondant (ces valeurs pouvant soit être mesurées expérimentalement sur des prélèvements effectués sur un pneumatique soit être obtenues par simulation numérique en tenant compte des propriétés mécaniques spécifiques des renforts et des caractéristiques dimensionnelles de l'armature (nombre de renfort par unité de largeur, c'est-à-dire dans une direction perpendiculaire à la direction moyenne desdits renforts dans l'armature).

La largeur Ls du sommet est prise comme la plus grande largeur de couplage mécanique entre au moins deux nappes de travail ; cette largeur de couplage est sensiblement égale ou inférieure à la largeur de la nappe de travail la plus large.

Une variante de réalisation consiste à réaliser l'armature de renforcement circonférentiel de manière discontinue dans la direction axiale : une partie de ladite armature est placée à l'aplomb de chaque région du sommet dépourvue d'une nappe de renforcement (c'est-à-dire axialement entre les nappes de renforcement méridien et axialement à l'extérieur desdites nappes), les autres régions (c'est-à-dire celles pourvues d'une nappe de renforcement méridien) étant totalement dépourvue.

Une autre variante de réalisation consiste à disposer une armature de renforcement circonférentiel de manière continue dans la direction axiale (c'est-à-dire que l'ensemble de cette armature recouvre en totalité la largeur Ls du sommet) tout en adoptant des rigidités variables selon les régions.

Préférentiellement, pour chaque pneumatique la rigidité moyenne de compression de la nappe de renfort méridien dans le sens des renforts de ladite nappe par unité de longueur de nappe, est supérieure à 1 GPa (1.10⁹ Pa, c'est-à-dire 1.10⁹ N/m²), cette rigidité étant obtenue en multipliant la rigidité de compression d'un renfort par le nombre de renforts par unité de longueur de nappe.

Les renforts de l'armature de renforcement circonférentiel peuvent être de nature métallique ou textile et être employés sous forme de fils ou de câbles. Selon l'invention, l'armature de renforcement circonférentiel peut comprendre des renforts de natures différentes afin d'obtenir les écarts de rigidité d'extension circonférentiel voulus.

D'autres caractéristiques et avantages de l'invention ressortent de la description faite ci-après en référence aux dessins annexés qui montrent, à titre d'exemples non limitatifs, des formes de réalisation de l'objet de l'invention.

Des exemples de réalisation, donnés à titre non limitatif, sont présentés ci-après avec les dessins ci-joints suivant lesquels :

la figure 1 montre une coupe méridienne d'un pneumatique selon l'invention comportant deux nappes de renforcement méridien et une armature de renfort circonférentiel discontinue axialement ;

la figure 2 montre une seconde variante selon laquelle l'armature de renforcement circonférentielle est continue axialement.

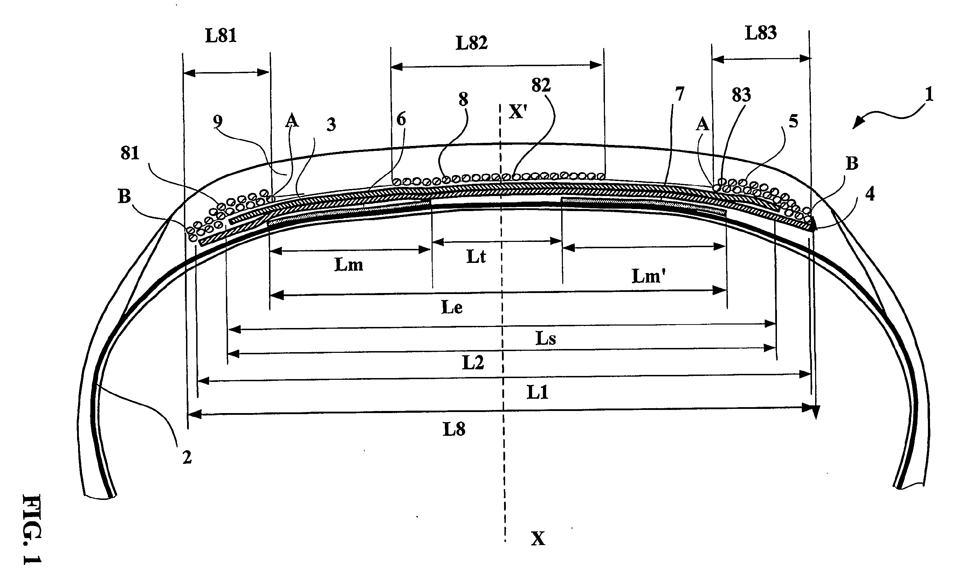

Avec la figure 1, on montre une variante de réalisation d'un pneumatique de dimension 225/50 R 17 selon l'invention. Ce pneumatique comprend :

une carcasse radiale 2 dont les renforts sont des câbles textiles en polyester;

un sommet 3 comportant une première et une seconde nappes de travail 4, 5 dont les renforts sont des câbles métalliques des structure 4-26 (c'est-à-dire quatre fils de 0.26 mm de diamètre) employés dans chaque nappe avec un pas moyen de 1.25 mm (le pas correspond à la distance moyenne entre deux renforts d'une même nappe). Les angles des renforts de la première nappe de travail 4 radialement la plus proche de la carcasse 2 est égal ou proche de 25° (par rapport à la direction circonférentielle) et celui de la seconde nappe de travail 5 est égal à ou proche de -25° de façon à ce que les renforts de cette seconde nappe 5 soient croisés avec les renforts de la première nappe 4.

Les largeurs L1 et L2 des première et seconde nappes de travail 4, 5 sont respectivement égales à : 194 et 180 mm. La largeur Ls du sommet est ici égale à 180 mm et correspond à la largeur de la nappe de travail 5 la moins large.

En outre, on dispose, de part et d'autre du plan équatorial (dont la trace est la droite XX' sur le plan de la figure), deux nappes additionnelles 6, 7 de renforcement méridien du sommet dont les largeurs Lm et Lm' sont égales à 76 mm. Ces nappes sont composées de renforts métalliques de structure identique à celles des câbles des nappes de travail 4, 5 ; les renforts des nappes additionnelles 6, 7 sont disposés dans chacune desdites nappes selon un pas moyen de 2.00 mm et selon un angle moyen égal 90° avec la direction circonférentielle. Les extrémités axialement les plus à l'extérieur de chacune des nappes additionnelles 6, 7 de renforcement méridien sont situées axialement à l'intérieur de la position des extrémités axialement à l'extérieur de la nappe de travail la moins large (ici la nappe 5 radialement la plus à l'extérieur).

La distance Lt séparant les extrémités axialement les plus à l'intérieur (c'est-à-dire les plus proches du plan équatorial) des nappes de renforcement méridien est ici égale à 12 mm. Cette distance est égale à 6% de la largeur Ls du sommet.

De plus, l'armature de sommet comporte radialement à l'extérieur une armature de renforcement circonférentiel 8 discontinue axialement et formée de trois parties distinctes 81, 82, 83 de largeurs L81, L82, L 83 respectivement ; chaque partie d'armature de renforcement circonférentiel 8 comprend une pluralité de renforts disposés selon un angle égal ou proche de 0° avec la direction circonférentielle. Dans le cas présent, ces renforts sont des câbles de Nylon® 140x2 posés avec un pas de 1 mm. Les largeurs L81, L82, L83 sont égales à 35, 30 et 35 mm respectivement. La distance L8 séparant les extrémités axialement les plus à l'extérieur de l'armature de renforcement circonférentiel 8 est voisine de la largeur L1 de la première nappe de travail et test donc supérieure à la distance Le séparant les extrémités axialement les plus éloignées des nappes de renforcement méridien 6, 7.

La partie 82 d'armature de renforcement circonférentiel en position médiane a une largeur L82 égale à 30 mm. Cette armature centrale est telle qu'elle recouvre en totalité la distance Lt entre les extrémités des nappes de renfort méridien 6, 7 les plus proches du plan équatorial sans pour autant recouvrir lesdites nappes de renfort méridien sur plus de 20% de leurs largeurs respectives.

Les deux autres parties 81, 83 d'armature de renforcement circonférentiel situées près des extrémités axialement à l'extérieur de l'armature de sommet sont symétriques par rapport au plan équatorial du pneumatique et composées des renforts de mêmes caractéristiques que ceux employés pour la partie médiane 82 et sont disposés pour former deux empilements dans la direction radiale (la rigidité circonférentielle est ici double de la rigidité de la partie médiane). Chacune de ces armatures de renforcement circonférentiel dites "bord" s'étend entre un premier point A axialement intérieur proche de l'extrémité axialement la plus à l'extérieur des nappes de renfort méridien de manière à la recouvrir et un second point B axialement extérieur situé axialement au niveau de l'extrémité de la nappe de travail 4 la plus large. Dans le cas présent, le premier point A est situé à une distance égale à 77 mm par rapport au plan équatorial (c'est-à-dire axialement à l'intérieur du point axialement le plus à l'extérieur des nappes de renfort méridien 6, 7), et le second point B est situé à une distance égale à 103 mm par rapport au plan équatorial.

L'ensemble de la carcasse, du sommet et des nappes et armatures additionnelles est en outre surmonté radialement à l'extérieur par une bande de roulement 9.

En roulage sur véhicule, on a mesuré une diminution de l'usure de l'ordre de 25% comparativement à un pneumatique ayant les mêmes nappes de renforcement méridien mais n'ayant pas un renforcement circonférentiel adapté selon l'invention.

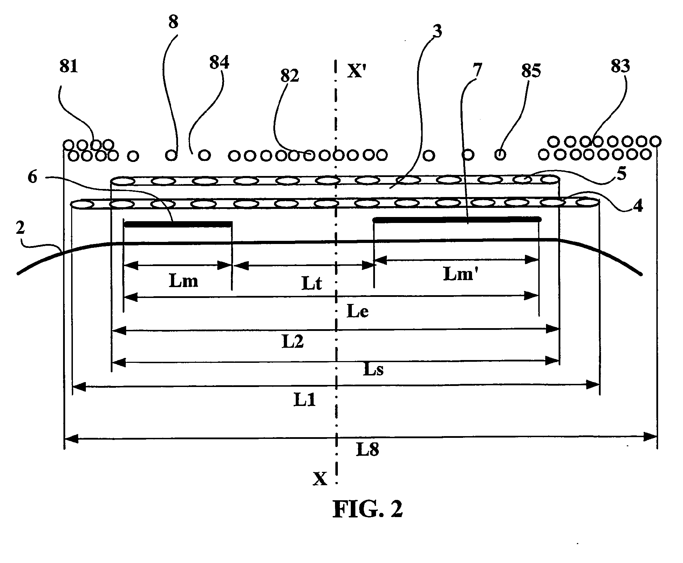

La variante d'armature sommet selon une variante de l'invention représentée à la figure 2 se différencie de celle décrite avec le support de la figure 1 en ce que l'armature additionnelle de renforcement circonférentiel 8 est continue axialement et présente dans la direction axiale (c'est-à-dire dans la direction perpendiculaire à la trace XX' du plan équatorial du pneumatique sur la figure 2) des variations de rigidité circonférentielle selon les régions de présence ou non de nappe de renfort méridien. Plus précisément, l'armature de sommet 3 comprend deux nappes de renforcement méridien 6, 7 entre l'armature de carcasse 2 et les nappes de travail 4, 5 et radialement à l'extérieur une armature 8 de renforcement circonférentiel sous la forme d'une nappe formée d'un enroulement de renforts dans la direction circonférentielle. Cet enroulement est réalisé avec un même renfort de manière à obtenir une distance axiale entre ses renforts qui est, à l'aplomb des régions sans nappe de renfort méridien, plus petite que la distance axiale entre ses renforts dans les régions à l'aplomb des nappes de renfort méridien. Par ailleurs, les nappes additionnelles de renfort méridien sont disposées d'une manière non symétrique par rapport au plan équatorial, la nappe 6 la plus décalée par rapport au plan équatorial pouvant alors être destinée à être du côté du pneumatique qui est placé extérieur véhicule lorsque ledit pneumatique est en usage.

La nappe de renforcement circonférentiel 8 comprend cinq régions 81, 84, 82, 85, 83 axialement consécutives d'un bord du sommet à l'autre (les régions 81, 82 et 83 correspondant aux régions bord et médiane à l'image de la variante montrée à la figure 1). Les régions 84, 85 radialement à l'aplomb des nappes 6, 7 de renfort méridien comportent des renforts circonférentiels disposés avec un pas entre renforts qui est plus grand que celui entre les renforts des régions bord 81, 83 et médiane 82 et en conséquence lesdites régions 84, 85 ont une moindre rigidité circonférentielle d'extension. La distance L8 séparant les extrémités axialement les plus à l'extérieur de l'armature de renforcement circonférentiel 8 est très légèrement supérieure dans le cas présent à la largeur L1 de la première nappe de travail et est donc supérieure à la distance Le séparant les extrémités des nappes de renforcement méridien 6, 7 axialement les plus éloignées.

Dans cette dernière variante, on peut obtenir la variation de rigidité de l'armature de renforcement circonférentiel en utilisant des renforts de natures différentes selon les régions tout en assurant une continuité axiale de l'armature (c'est-à-dire avec présence de renfort circonférentiel sur toute la largeur de l'armature de sommet).

Dans une autre variante non montrée, les nappes de renforcement méridien sont disposées radialement entre les deux nappes de travail.

Dans une autre variante de l'invention non montrée, l'armature de renforcement circonférentiel est disposée entre les nappes de travail.

Bien entendu, ce qui a été décrit avec le support des figures ne doit pas être considéré comme limitatif et en particulier, le nombre de nappes de travail peut être supérieur à deux.

## Revendications

1. Pneumatique (1) comprenant une armature de carcasse radiale (2) surmontée radialement à l'extérieur par une armature de sommet (3) de largeur (Ls) et comportant au moins deux nappes de travail (4, 5), chaque nappe de travail étant composée d'une pluralité de renforts disposés selon un angle moyen compris entre 17° et 35° avec la direction circonférentielle, les renforts d'une nappe de travail étant croisés avec les renforts d'une autre nappe de travail, cette armature de sommet (3) comprenant en outre deux nappes additionnelles de renforcement méridien (6, 7), de largeur axiale (Lm) et (Lm'), les extrémités axialement les plus à l'intérieur desdites nappes de renforcement méridien étant distantes d'une distance (Lt), les extrémités axialement les plus à l'extérieur desdites nappes de renforcement méridien étant distantes d'une distance (Le), ces nappes additionnelles (6, 7) comportant une pluralité de renforts faisant un angle supérieur à 60° avec la direction circonférentielle, l'armature de sommet comprenant en outre au moins une armature de renforcement circonférentiel (8) de largeur totale (L8) dont les renforts font avec le plan équatorial un angle inférieur ou égal à 10°, ce pneumatique étant **caractérisé en ce que** :
• la largeur totale (L8)de l'armature de renforcement circonférentiel (8) est au moins égale à la distance (Le) séparant les extrémités axialement les plus à l'extérieur des deux nappes additionnelles de renforcement méridien (6, 7),
• les extrémités axialement les plus à l'extérieur des nappes de renforcement méridien (6, 7) sont axialement à l'intérieur des extrémités axialement les plus à l'extérieur de la nappe de travail (5) la moins large,
• la rigidité d'extension dans la direction circonférentielle de l'armature de renforcement circonférentiel (8) dans les régions radialement en coïncidence avec les nappes de renforcement méridien est inférieure à la rigidité d'extension de ladite armature (8) dans les régions ne comportant pas de nappes de renforcement méridien.

2. Pneumatique (1) selon la revendication 1 **caractérisé en ce que** la distance axiale (Lt) entre les nappes de renforcement méridien (6, 7) est au plus égale à 15% de la largeur (Ls) du sommet.

3. Pneumatique (1) selon la revendication 1 ou la revendication 2 **caractérisé en ce que** les largeurs (Lm, Lm') des nappes de renforcement méridien (6, 7) sont comprises entre 37% et 49% de la largeur (Ls) du sommet.

4. Pneumatique (1) selon l'une des revendications 1 à 3 **caractérisé en ce que** les nappes de renforcement méridien (6, 7) sont disposées de part et d'autre du plan équatorial du pneumatique.

5. Pneumatique (1) selon l'une des revendications 1 à 4 **caractérisé en ce que** l'armature de renforcement circonférentiel est placée radialement à l'extérieur des nappes de travail

6. Pneumatique (1) selon l'une des revendications 1 à 5 **caractérisé en ce que** la rigidité d'extension dans la direction circonférentielle de l'armature de renforcement circonférentiel (8) dans les régions radialement en coïncidence avec les nappes de renforcement méridien (6, 7) est au plus égale à 50% à la rigidité d'extension de ladite armature dans les régions ne comportant pas de nappes de renforcement méridien.

7. Pneumatique selon l'une des revendications 1 à 6 **caractérisé en ce que** l'armature de renforcement circonférentiel (8) est discontinue dans la direction axiale.

## Claims

1. Tyre (1) comprising a radial carcass reinforcement (2) surmounted radially on the outside by a crown reinforcement (3) of width (Ls) comprising at least two working plies (4, 5), each working ply being composed of a plurality of reinforcing elements arranged at an average angle between 17° and 35° relative to the circumferential direction with the reinforcing elements of one working ply crossed relative to those of another working ply, this crown reinforcement (3) also comprising two additional meridian reinforcement plies (6, 7) of axial width (Lm) and (Lm'), the axially innermost ends of the said meridian reinforcement plies being a distance (Lt) apart, the axially outermost ends of the said meridian reinforcement plies being a distance (Le) apart, these additional plies (6, 7) comprising a plurality of reinforcing elements that make an angle larger than 60° with the circumferential direction, the crown reinforcement also comprising at least one circumferential reinforcement (8) of total width (L8) whose reinforcing elements make an angle smaller than or equal to 10° with the equatorial plane, the said tyre being **characterised in that**:
• the total width (L8) of the circumferential reinforcement (8) is at least equal to the distance (Le) between the axially outermost ends of the two additional meridian reinforcement plies (6, 7),
• the axially outermost ends of the meridian reinforcement plies (6, 7) are axially inside the axially outermost ends of the least wide working ply (5),
• the tensile rigidity of the circumferential reinforcement (8) in the circumferential direction is lower in the areas radially coincident with the meridian reinforcement plies, than is the tensile rigidity of the said reinforcement (8) in the areas that do not have meridian reinforcement plies.

2. Tyre (1) according to Claim (1) **characterised in that** the axial distance (Lt) between the meridian reinforcement plies (6, 7) is at most equal to 15% of the width (Ls) of the crown.

3. Tyre (1) according to Claims 1 or 2, **characterised in that** the widths (Lm, Lm') of the meridian reinforcement plies (6, 7) are between 37% and 49% of the width (Ls) of the crown.

4. Tyre (1) according to any of Claims 1 to 3, **characterised in that** the meridian reinforcement plies (6, 7) are positioned on either side of the equatorial plane of the tyre.

5. Tyre (1) according to any of Claims 1 to 4, **characterised in that** the circumferential reinforcement is positioned radially outside the working plies.

6. Tyre (1) according to any of Claims I to 5, **characterised in that** the tensile rigidity of the circumferential reinforcement (8) in the circumferential direction in areas radially coincident with the meridian reinforcement plies (6, 7) is at most equal to 50% of the tensile rigidity of the said reinforcement in areas having no meridian reinforcement plies.

7. Tyre according to any of Claims 1 to 6, **characterised in that** the circumferential reinforcement (8) is discontinuous in the axial direction.

## Patentansprüche

1. Reifen (1), der eine Radialkarkasse (2) aufweist, über der sich in radialer Richtung außen eine Laufflächenkronen-Verstärkung (3) mit der Breite (Ls) befindet, die mindestens zwei Arbeitslagen (4, 5) aufweist, wobei jede Arbeitslage aus mehreren Verstärkungselementen zusammengesetzt ist, die unter einem zwischen 17° und 35° betragenden mittleren Winkel mit der Umfangsrichtung angeordnet sind, wobei die Verstärkungselemente einer Arbeitslage sich mit den Verstärkungselementen einer anderen Arbeitslage überkreuzen, wobei diese Laufflächenkronen-Verstärkung (3) außerdem zwei zusätzliche meridiane Verstärkungslagen (6, 7) mit der axialen Breite (Lm) bzw. (Lm') aufweist, wobei die axial am weitesten innen befindlichen Enden dieser meridianen Verstärkungslagen einen Abstand (Lt) voneinander haben, wobei die axial am weitesten außen befindlichen Enden dieser meridianen Verstärkungslagen einen Abstand (Le) voneinander haben, wobei diese zusätzlichen Lagen (6, 7) mehrere Verstärkungselemente aufweisen, die einen Winkel größer als 60° mit der Umfangsrichtung bilden, wobei die Laufflächenkronen-Verstärkung außerdem mindestens eine Umfangsverstärkungsschicht (8) mit der Gesamtbreite (L8) aufweist, deren Verstärkungselemente mit der Äquatorialebene einen Winkel kleiner oder gleich 10° bilden, wobei dieser Reifen **dadurch gekennzeichnet ist, dass**:
- die Gesamtbreite (L8) der Umfangsverstärkungsschicht (8) mindestens gleich dem Abstand (Le) ist, der die axial am weitesten außen befindlichen Enden der zwei zusätzlichen meridianen Verstärkungslagen (6, 7) trennt,
- die axial am weitesten außen befindlichen Enden der meridianen Verstärkungslagen (6, 7) sich axial innerhalb der axial am weitesten außen befindlichen Enden der am wenigsten breiten Arbeitslage (5) befinden,
- die Dehnungssteifigkeit der Umfangsverstärkungsschicht (8) in der Umfangsrichtung in den Bereichen, die radial mit den meridianen Verstärkungslagen zusammenfallen, kleiner ist als die Dehnungssteifigkeit dieser Verstärkungsschicht (8) in den Bereichen, die keine meridianen Verstärkungslagen aufweisen.

2. Reifen (1) nach Anspruch 1, **dadurch gekennzeichnet, dass** der axiale Abstand (Lt) zwischen den meridianen Verstärkungslagen (6, 7) höchstens 15 % der Breite (Ls) der Laufflächenkrone beträgt.

3. Reifen (1) nach Anspruch 1 oder Anspruch 2, **dadurch gekennzeichnet, dass** die Breiten (Lm, Lm') der meridianen Verstärkungslagen (6, 7) zwischen 37 % und 49 % der Breite (Ls) der Laufflächenkrone betragen.

4. Reifen (1) nach einem der Ansprüche 1 bis 3, **dadurch gekennzeichnet, dass** die meridianen Verstärkungslagen (6, 7) beiderseits der Äquatorialebene des Reifens angeordnet sind.

5. Reifen (1) nach einem der Ansprüche 1 bis 4, **dadurch gekennzeichnet, dass** die Umfangsverstärkungsschicht radial außerhalb der Arbeitslagen angebracht ist.

6. Reifen (1) nach einem der Ansprüche 1 bis 5, **dadurch gekennzeichnet, dass** die Dehnungssteifigkeit der Umfangsverstärkungsschicht (8) in der Umfangsrichtung in den Bereichen, die radial mit den meridianen Verstärkungslagen (6, 7) zusammenfallen, höchstens 50 % der Dehnungssteifigkeit dieser Verstärkungsschicht in den Bereichen, die keine meridianen Verstärkungslagen aufweisen, beträgt.

7. Reifen (1) nach einem der Ansprüche 1 bis 6, **dadurch gekennzeichnet, dass** die Umfangsverstärkungsschicht (8) in der axialen Richtung diskontinuierlich ist.
